# EUROPEAN PATENT APPLICATION

(11) **EP 4 783 071 A1**
(43) Date of publication of application: **29.07.2026**
(21) Application number: 25153560.5
(22) Date of filing: 23.01.2025
(51) Int. Cl.: G06N 3/0495, G06N 5/01, G06N 3/096

(54) **METHOD AND APPARATUS FOR COMPRESSING A NEURAL NETWORK, ELECTRONIC DEVICE, AND AIRCRAFT**

(71) Applicant: Airbus S.A.S., 31700 Blagnac (FR)
(72) Inventor: Geyer, Fabien, 82024 Taufkirchen (DE)
(74) Representative: OTN Airbus SAS

(57) **Abstract**

Proposed is a method and an apparatus (100) for compressing a neural network. The processing circuitry (110) is configured to receive a neural network comprising a set of parameters being in at least one floating-point number format of a first precision. Further, the processing circuitry (110) is configured to apply at least one mathematical model on the neural network to determine errors introduced by using arithmetic of a second precision lower than the first precision and propagation through network layers of the neural network due to using the arithmetic of the second precision instead of the first precision. The processing circuitry (110) is further configured to apply a solver to an optimization problem formulated based on the errors determined by the at least one mathematical model to determine a set of optimized parameters. Further, the processing circuitry (110) is configured to compress the neural network based on the set of optimized parameters to output a compressed neural network.

## Description

### TECHNICAL FIELD OF THE INVENTION

The present invention relates to compression of a neural network. In particular, the present invention relates to a computer-implemented method and an apparatus for compressing a neural network. Further, the present invention relates to an electronic device, an aircraft, and a computer program.

### TECHNICAL BACKGROUND

In the field of artificial intelligence (Al), neural network inference refers to the process of using a trained neural network to make predictions on or draw conclusions from new, unseen data. Neural network inference may be used for deploying Al applications in a wide range of real-world applications or scenarios, such as image recognition, e.g. in electronic devices, smartphones, or the like, embedded systems, e.g. embedded Al in planes, e.g. visual-based landing or other aircraft applications, quantization of large language models (LLMs), self-driving cars, and various other technical applications.

However, a trained neural network requires memory and/or resources and may have a correspondingly large overall footprint when applied to a technical system.

### SUMMARY OF THE INVENTION

An object of the invention is to provide means for reducing the footprint of a neural network in a technical system. This object is solved by the subject-matter of the appended independent claims. Further embodiments are defined in the appended dependent claims.

According to a first aspect, there is provided a computer-implemented method for compressing a neural network. The method comprises receiving a neural network comprising a set of parameters being in at least one floating-point number format of a first precision. The method further comprises applying at least one mathematical model, e.g. statistical model, on the neural network to determine errors introduced by using arithmetic of a second precision lower than the first precision and propagation through network layers of the neural network due to using the arithmetic of the second precision instead of the first precision. Further, the method comprises applying a solver to an optimization problem formulated based on the errors determined by the at least one mathematical model to determine a set of optimized parameters. In addition, the method comprises compressing the neural network based on the set of optimized parameters to output a compressed neural network.

The proposed method is configured to model errors introduced by lower-precision arithmetic, i.e. the at least one arithmetic of the second precision, and propagation through network layers with the at least one mathematical model, then formulates an optimization problem that includes these considerations. The solver, which may also be referred to as an optimizer, provides a set of optimized parameters appropriate for the compressed neural network. This may enhance efficiency without significant loss in performance accuracy compared to the original full-precision neural network, i.e. the neural network using the at least one first precision. By strategically employing lower-precision arithmetic and/or lower-precision operations, the compressed model may achieve significant speedups and reduce the footprint, e.g. the memory footprint, without significantly impacting accuracy. This balance between performance and precision may enable efficient inference on diverse hardware platforms, from powerful cloud servers to energy-efficient embedded systems. The method for neural network compression and mixed precision techniques allows for bridging the gap between the theoretical capabilities of neural networks and their practical deployment in real-world applications. An example application is embedded models on integrated circuits, such as FPGAs (Field Programmable Gate Arrays) or the like, where compressed models help to reduce the overall footprint and resources required for inference, wherein the application of the compressed neural network is not limited to integrated circuits, FPGAs, or the like.

As used herein, the neural network received and/or to be compressed, i.e. the input neural network, may, for example, be a convolutional neural network (CNN), a recurrent neural network (RNN), a feedforward neural network or the like. The neural network may have been trained in advance with training data. The set of parameters of the neural network may refer to the elements that the neural network learns from training data. These parameters may be adjusted during the training process to minimize the error between the network's predictions and the actual outcomes. The set of parameters may comprise at least one of weights, biases, their derivatives with respect to inputs during backpropagation, and activations, wherein further or other parameters are also conceivable, provided that they are initially given in a higher-precision format. The output compressed neural network may comprise a smaller (data) size than the input neural network. The compression of the input neural network may reduce the network complexity.

Further, as used herein, a higher-precision arithmetic may comprise at least one higher-precision (number) format, such as float64, float32, or the like. A lower-precision arithmetic may refer to any arithmetic that has a lower precision than the high-precision (number) format. Accordingly, the lower-precision arithmetic may comprise at least one of int8, uint8, int16, float16, or the like. Converting the higher-precision arithmetic into the lower-precision arithmetic may introduce errors, such as rounding errors, truncation errors, or the like. The errors introduced by that conversion may be introduced across network layers.

As used herein, the at least one mathematical model may be configured to characterize and/or quantify the errors introduced by converting the set of parameters of the input neural network from higher-precision formats, such as float64, float32, or the like, into lower-precision ones, such as int8, uint16, float 16, or the like. For example, such mathematical model may be constructed for each parameter within the input neural network. The at least one mathematical model may use Gaussian distributions representing random errors. The quantization noise may be modeled by assuming it follows a uniform distribution within the range dictated by resolution limitations. Further, the at least one mathematical model, may be configured to determine how errors propagate through each layer of the input neural network, considering various operations like convolutional layers, matrix multiplications, activation functions, e.g., ReLU, sigmoid, etc. Since these mathematical models rely on Gaussian or other noise distributions representing the error magnitudes at different computation stages in a probabilistic manner rather than deterministic calculations. The method may define at least one mathematical model that characterizes errors caused by lower-precision floating-point or fixed-point arithmetic used during neural network computations, e.g. weights and biases, activation functions, etc. This may be formulated using Gaussian error distribution models representing the propagation of quantization noise through layers. The mean squared error between the original full-precision values and compressed ones may serve as a loss function in subsequent stages to optimize these quantities under constraints imposed by lower-precision arithmetic capabilities while ensuring acceptable output accuracy, e.g. misclassification probability.

Further, as used herein, the solver, which may also refer to as an optimizer, may be understood as a programming and/or software tool configured to solve optimization problems. For example, a solver and/or an optimizer may be configured to search for the position of a local minimum of a non-linear objective function. The solver may be provided by a software library or the like.

According to an embodiment, the method may further comprise applying at least one constraint to the formulation of the optimization problem. The at least one constraint may be configured to indicate a quality requirement of predicted values to be satisfied by the set of optimized parameters in the compressed neural network. The at least one constraint may be used to define the quality requirement for outputs by specifying an acceptable probability threshold, such as a maximum misclassification rate and/or probability, e.g. allowing up to a certain percentage of errors, or the like. For example, this may comprise calculating a likelihood of outputting correct or incorrect classifications based on learned parameters undergoing quantization noise during forward passes through network layers, effectively setting misclassification probability as a boundary condition. In other words, the set of optimized parameters may be determined without degrading the acceptable quality level in terms of misclassification probability. The at least one constraint may be input to the method along with the input neural network. In this way, the method may allow for optimizing the parameters of the neural network, e.g. reduce the network complexity, while considering and/or maintaining the required predication accuracy of the output compressed neural network compared to the full-precision input neural network.

In an embodiment, the method may further comprise applying at least one constraint to the formulation of the optimization problem. The at least one constraint comprising at least one of a hardware constraint and a software constraint for a specific compression scenario. For example, the at least one constraint may refer to memory size limitations, architecture-based computing restrictions, or the like. In this way, the compression of the input neural network may be adapted to different application and/or compression scenarios.

According to an embodiment, the arithmetic of the second precision may at least comprise at least one floating-point number format. The at least one floating-point number format of the second precision may be of lower precision than the at least one floating-point number format of the first precision. For example, the at least one floating-point number format of the first precision is float64, float32, or the like, the at least one floating-point number format of the second precision may comprise float16, or the like. In this way, the method may be applied to reduced- or lower-precision floating-point arithmetic, and not only to fixed-point arithmetic, thereby maintaining a certain precision.

In an embodiment, the arithmetic of the second precision may comprise a combination of at least one floating-point number format and at least one integer number format. For example, the at least one integer number format may comprise at least one of int8, uint8, int16, etc. In this way, the method may consider both floating-point and fixed-point arithmetic.

According to an embodiment, the at least one mathematical model may be configured to determine the errors caused by converting the respective at least one floating-point number format of the first precision into at least one number format of the second precision. For each parameter within the input neural network, the at least one mathematical model may determine how the respective parameter is likely to change when using the second precision.

In an embodiment, the at least one mathematical model may be configured to determine the errors caused by using the arithmetic of the second precision during neural network computations, considering various network computation operations.

According to an embodiment, the various neural network computations may comprise one or more of a convolution operation, a matrix multiplication, and an activation function.

In an embodiment, the at least one mathematical model may utilize one or more Gaussian error distributions and/or noise distributions.

According to an embodiment, the optimization problem may be formulated as a mixed-integer nonlinear programming, MINLP, problem. The solver may be configured to solve the MINLP problem. To solve this MINLP problem, the solver may be implemented to be robust enough to handle non-convexity and discrete variables often encountered with such optimization problems. An exemplary approach may be to use standard gradient-based MINLP methods such as sequential quadratic programming (SQP) or sequential linear-quadratic programming (SLOP). This may be possible as the mathematical models described herein can be formulated in such a way that the objective function and constraints functions of the optimization problem are differentiable. Another exemplary approach may involve heuristics or metaheuristic algorithms like simulated annealing (SA), genetic algorithms (GA) or hybrid approaches. These methods may be particularly useful for navigating the complex landscape of possible solutions by exploring a large number of combinations while keeping track of promising candidates that stay close to feasible regions determined through constraint satisfaction based on the mathematical models and error propagation determination, allowing to find an optimal set of quantized parameters, e.g. weights, biases or the like, which fulfills predefined constraints without degrading the acceptable quality level in terms of misclassification probability.

In an embodiment, the solver may utilize at least one of sequential quadratic programming, SQP, sequential linear-quadratic programming, SLQP, a heuristic algorithm, a metaheuristic algorithm, simulated annealing, SA, a genetic algorithm, GA, or a hybrid of the aforementioned.

According to a second aspect, there is provided an apparatus for compressing a neural network. The apparatus may be configured to implement the methods disclosed herein. The apparatus comprises processing circuitry. The processing circuitry is configured to receive a neural network comprising a set of parameters being in at least one floating-point number format of a first precision. Further, the processing circuitry is configured to apply at least one mathematical model on the neural network to determine errors introduced by using arithmetic of a second precision lower than the first precision and propagation through network layers of the neural network due to using the arithmetic of the second precision instead of the first precision. The processing circuitry is further configured to apply a solver to an optimization problem formulated based on the errors determined by the at least one mathematical model to determine a set of optimized parameters. Further, the processing circuitry is configured to compress the neural network based on the set of optimized parameters to output a compressed neural network.

The apparatus may be a computer, computing device, or the like, or a part thereof, such as a module, unit, or the like. The processing circuitry may comprise at least one of a CPU, or another general-purpose processor, a digital signal processor (digital signal processor, DSP), an ASIC, an FPGA or another programmable logic device, a discrete gate or transistor logic device, a discrete hardware component, or the like. The general-purpose processor may be a microprocessor, any conventional processor, or the like. Alternatively, the processor may be a graphics processing unit (GPU), a neural network processing unit (NPU), a microprocessor, an ASIC, or one or more integrated circuits configured to control program execution according to the methods disclosed herein.

Regarding the processing steps executed by the processing circuitry, reference is made to the first aspect, since the apparatus and/or processing circuitry may be configured to implement the method of the first aspect. Details thereof are not described again.

In an embodiment, the apparatus may further comprise an input interface configured to receive the input neural network. Further, the apparatus may comprise an output interface configured to output the compressed neural network.

According to another aspect, there is provided an electronic device. The electronic device may comprise at least one neural network compressed according to the method according to the first aspect. For example, the electronic device may be at least one of a cloud server, an embedded system, a smartphone, or the like. The electronic device may be configured for e.g. visual-based landing or other aircraft applications, quantization of large language models (LLMs), self-driving cars, and various other technical applications.

According to another aspect, there is provided an aircraft. The aircraft comprises an electronic device comprising a neural network compressed according to the method of the first aspect. For example, the electronic device of the aircraft may be an embedded system or any other electronic device of an aircraft. By way of example, the electronic device may be configured for visual-based landing or other aircraft applications.

According to another aspect, there is provided a computer program. The computer program comprises instructions which, when the program is executed by a computer, e.g. the apparatus disclosed herein, cause the computer to carry out the method of the first aspect.

According to another aspect, there is provided a computer-readable medium. The computer-readable medium comprises instructions which, when the program is executed by a computer, e.g. the apparatus disclosed herein, cause the computer to carry out the method of the first aspect.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the figures in the drawings. In the drawings:
- Fig. 1: illustrates in a block diagram an exemplary apparatus for compressing a neural network, according to an embodiment.
- Fig. 2: illustrates in a block diagram an approach for compressing a neural network according to an embodiment.
- Fig. 3: illustrates in a flow chart a method for compressing a neural network according to an embodiment.
- Fig. 4: illustrates an exemplary electronic device comprising a neural network compressed according to an embodiment.
- Fig. 5: illustrates an aircraft comprising an electronic device comprising a neural network compressed according to an embodiment.

In the figures of the drawing, elements, features and components which are identical, functionally identical and of identical action are denoted in each case by the same reference designations unless stated otherwise.

In the figures of the drawings, elements, features and components which are identical, functionally identical and of identical action are denoted in each case by the same reference designations unless stated otherwise.

### DESCRIPTION OF EXEMPLARY EMBODIMENTS

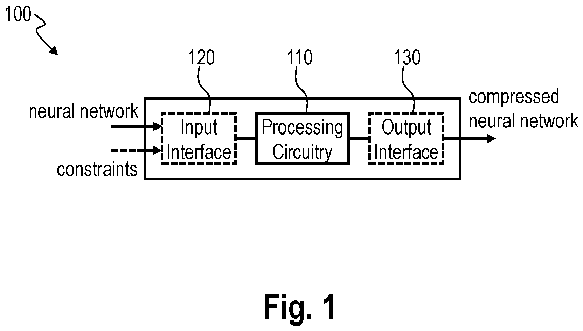

Fig. 1 illustrates in a block diagram an exemplary apparatus 100 for compressing a neural network, which neural network is received as an input. This input neural network may also be referred to as an original neural network and/or a full-precision neural network. The input neural network may be trained using training data. The input neural network comprises a set of parameters, such as at least one of weights, biases, their derivatives with respect to inputs during backpropagation, and activations, etc. The apparatus 100 may be a suitable computing device and comprises processing circuitry 110. The processing circuitry 110 is configured to compress the input neural network and to output a compressed neural network. This output compressed neural network may also be referred to as a lower-precision or a mixed-precision neural network. The output compressed neural network may have a smaller size, e.g. a smaller memory footprint, and/or may require less resources, particularly for neural network inference, than the input neural network, i.e. the original or full-precision neural network.

The processing circuitry 110 may comprise, for example, at least one of a CPU, or another general-purpose processor, a digital signal processor (DSP), an ASIC, an FPGA or another programmable logic device, a discrete gate or transistor logic device, a discrete hardware component, or the like. The general-purpose processor may be a microprocessor, any conventional processor, or the like. Alternatively, the processor may be a graphics processing unit (GPU), a neural network processing unit (NPU), a microprocessor, an ASIC, or one or more integrated circuits configured to control program execution according to the methods disclosed herein.

Optionally, the apparatus 100 may comprise an input interface 120 operationally coupled to the processing circuitry 110 and configured to receive the input neural network. Further optionally, the apparatus 100 may comprise an output interface 130 operationally coupled to the processing circuitry 110 and configured to output a compressed neural network compressed by the processing circuitry 110 as described below. It is noted that the components and inputs of the apparatus 100 shown in dashed lines in Fig. 1 are optional.

The processing circuitry 110 is configured to receive the input neural network comprising a set of parameters, at least some of which are in at least one floating-point number format of a first precision. For example, the at least one floating-point number format of the first precision is float64, float32, etc., wherein this is not limited herein. Further, the processing circuitry 110 is configured to apply at least one mathematical model, e.g. statistical model, on the input neural network to determine errors introduced by using arithmetic of a second precision lower than the first precision and propagation through network layers of the neural network due to using the arithmetic of the second precision instead of the first precision. For example, the arithmetic of the second precision may comprise at least one of int8, uint8, int16, float16, etc., or any other number format having a precision lower than the first precision of the input neural network. The processing circuitry 110 is further configured to apply a solver to an optimization problem formulated based on the errors determined by the at least one mathematical model to determine a set of optimized parameters. Merely by way of example, the optimization problem may be formulated as a mixed-integer nonlinear programming (MINLP) problem. Further, the processing circuitry 110 is configured to compress the neural network based on the set of optimized parameters to output a compressed neural network.

For example, the at least one mathematical model may be configured to characterize and/or quantify the errors introduced by converting the set of parameters of the input neural network from higher-precision formats, such as float64, float32, etc., into lower-precision ones, such as int8, uint16, float 16, etc. By way of example, such mathematical model(s) may be constructed for each parameter within the input neural network. The at least one mathematical model may use Gaussian distributions representing random errors. The quantization noise may be modeled by assuming it follows a uniform distribution within the range dictated by resolution limitations. Further, the at least one mathematical model, may be configured to determine how errors propagate through each layer of the input neural network, considering various operations like convolutional layers, matrix multiplications, activation functions, e.g., ReLLI, sigmoid, etc. Since these mathematical models rely on Gaussian or other noise distributions representing the error magnitudes at different computation stages in a probabilistic manner rather than deterministic calculations. The at least one mathematical model may be configured to characterize errors caused by lower-precision floating-point or fixed-point arithmetic used during neural network computations, e.g. weights and biases, activation functions, etc. This may be formulated using Gaussian error distribution models representing the propagation of quantization noise through layers. The mean squared error between the original full-precision values and compressed ones may serve as a loss function in subsequent stages to optimize these quantities under constraints imposed by lower-precision arithmetic capabilities while ensuring acceptable output accuracy, e.g. misclassification probability.

By way of example, the at least one mathematical model may be or may comprise at least one statistical model. It is noted that for determining the errors introduced by using arithmetic of the second precision and determining the propagation of the errors through the network layers of the neural network due to using the arithmetic of the second precision instead of the first precision, one or more separate models or one or more common models may be utilized. By way of example, for fixed-point quantization to an integer with b bits, the variance of the error can be expressed as 1/(12 * 2^bits), assuming that a uniform quantizer is used.

Still referring to Fig. 1, the apparatus 100 may optionally receive at least one constraint as an input, as indicated in Fig. 1 by a dashed arrow. For example, the at least one constraint may be applied to the formulation of the optimization problem. The at least one constraint may be configured to indicate a quality requirement of predicted values to be satisfied by the set of optimized parameters in the output compressed neural network. The at least one constraint may be used to define the quality requirement for outputs, i.e. predictions, by specifying an acceptable probability threshold, such as a maximum misclassification rate and/or probability, e.g. allowing up to a certain percentage of errors, or the like. For example, this may comprise calculating a likelihood of outputting correct or incorrect classifications based on learned parameters undergoing quantization noise during forward passes through network layers, effectively setting misclassification probability as a boundary condition. In other words, the set of optimized parameters may be determined without degrading the acceptable quality level in terms of misclassification probability. Further, the at least one constraint may comprise at least one of a hardware constraint and a software constraint for a specific compression scenario. For example, the at least one constraint may refer to memory size limitations, architecture-based computing restrictions, or the like.

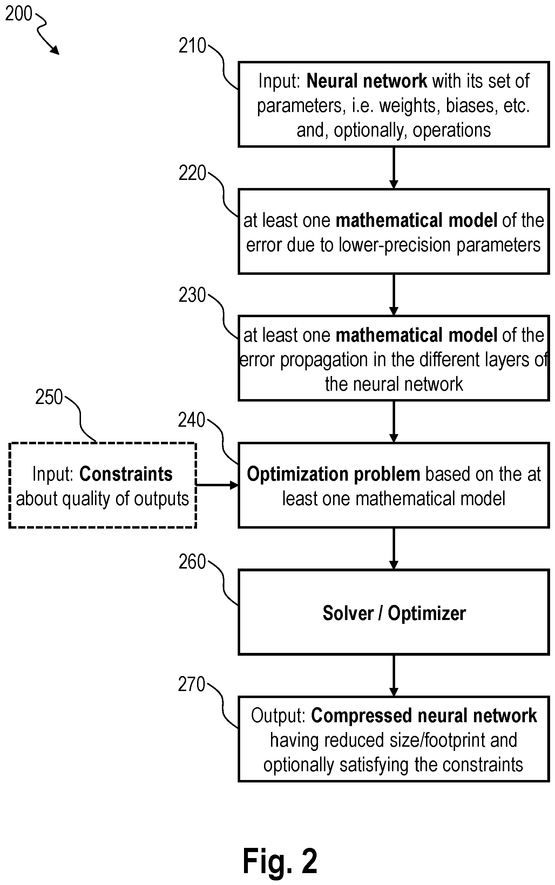

Fig. 2 illustrates in a block diagram 200 an approach for compressing a neural network. The approach may be implemented using, for example, the above-described apparatus 100 or any other suitable computing device.

In block 210, the above-mentioned neural network is input. It comprises a set of parameters, such as weights, biases, etc. In at least some embodiments, the input neural network may comprise operations, e.g. convolution, matrix multiplication, etc. In block 220, at least one mathematical model is applied to determine the error due to using lower-precision parameters and, optionally, operations. In block 230, at least one mathematical model is applied to determine the error propagation in the different layers of the neural network due to using the lower-precision parameters and, optionally, operations. In block 240, an optimization problem is formulated based on the at least one mathematical model and/or its formulations or results. According to block 250, optionally, the above-mentioned at least one constraint may be applied to the formulation of the optimization problem of block 240. In block 260, the above-mentioned solver, e.g. optimizer, is applied to the optimization problem of block 240. The result of solving the optimization problem of block 240 provides the above-mentioned set of optimized parameters. This set of optimized parameters is used to compress the input neural network. In block 270, the compressed neural network is output, which has a reduced size and/or footprint and, optionally, satisfies the at least one constraint of block 250.

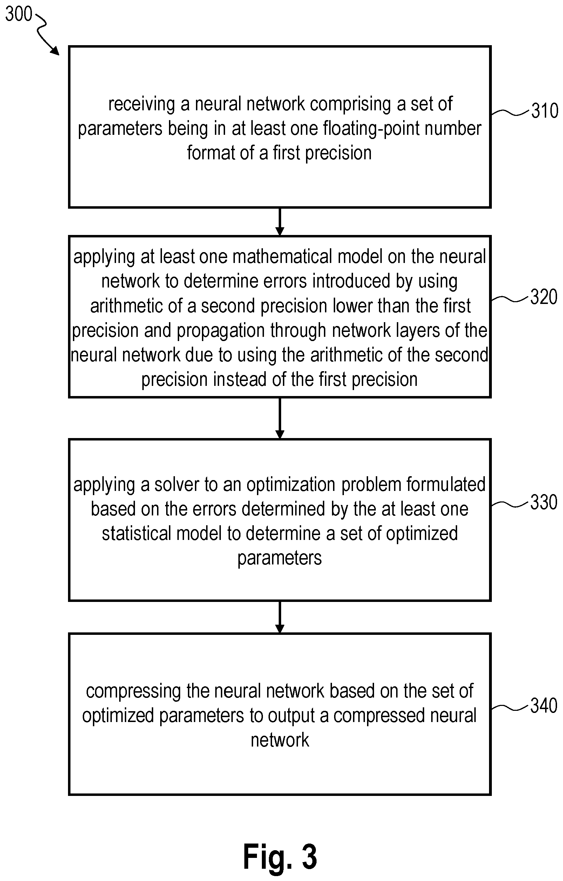

Fig. 3 illustrates in a flow chart a method 300 for compressing a neural network according to an embodiment. The method may be implemented using, for example, the above-described apparatus 100 or any other suitable computing device.

The method 300 comprises receiving 310 a neural network comprising a set of parameters being in at least one floating-point number format of a first precision. Further, the method 300 comprises applying 320 at least one mathematical model on the neural network to determine errors introduced by using arithmetic of a second precision lower than the first precision and propagation through network layers of the neural network due to using the arithmetic of the second precision instead of the first precision. The method 300 further comprises applying 330 a solver to an optimization problem formulated based on the errors determined by the at least one mathematical model to determine a set of optimized parameters. Further, the method 300 comprises compressing 340 the neural network based on the set of optimized parameters to output a compressed neural network.

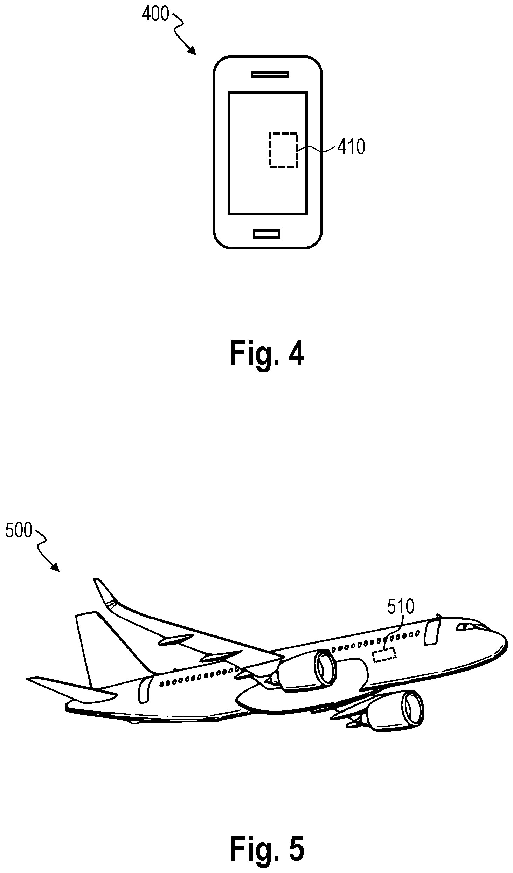

Fig. 4 illustrates an exemplary electronic device 400. Merely by way of example, the electronic device 400 is illustrated as a mobile device, such as smartphone. It is noted that the electronic device may be any hardware platform, device or system, from a powerful cloud server to an energy-efficient embedded system. The methods and approaches disclosed herein may be applied to integrated circuits, such as FPGAs (Field Programmable Gate Arrays) or the like, where compressed models help to reduce the overall footprint and resources required for inference.

The electronic device 400 comprises a neural network compressed according to the methods and/or approaches disclosed herein. For example, the electronic device 400 may comprise a component 410, such as a memory, an FPGA, or other electronic component configured to implement, store, process, etc. the compressed neural network.

Fig. 5 illustrates an aircraft 500. The aircraft 500 comprises a device 510 comprising a neural network compressed according to the methods and/or approaches disclosed herein.

For example, the device 510 may be or may comprise an embedded artificial intelligence (Al) application. By way of example, this may be implement or may be used for visual-based landing.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### LIST OF REFERENCE SIGNS

- 100: apparatus
- 110: processing circuitry
- 120: input interface
- 130: output interface
- 200: block diagram
- 2x0: (functional) blocks
- 300: method
- 3x0: method steps
- 400: electronic device
- 410: component
- 500: aircraft
- 510: electronic device

## Claims

1. A computer-implemented method (300) for compressing a neural network, the method comprising:
receiving (310) a neural network comprising a set of parameters being in at least one floating-point number format of a first precision;
applying (320) at least one mathematical model on the neural network to determine errors introduced by using arithmetic of a second precision lower than the first precision and propagation through network layers of the neural network due to using the arithmetic of the second precision instead of the first precision;
applying (330) a solver to an optimization problem formulated based on the errors determined by the at least one mathematical model to determine a set of optimized parameters; and
compressing (340) the neural network based on the set of optimized parameters to output a compressed neural network.

2. The method of claim 1, further comprising:
applying at least one constraint to the formulation of the optimization problem, the at least one constraint indicating a quality requirement of predicted values to be satisfied by the set of optimized parameters in the compressed neural network.

3. The method of claim 1 or 2, further comprising:
applying at least one constraint to the formulation of the optimization problem, the at least one constraint comprising at least one of a hardware constraint and a software constraint for a specific compression scenario.

4. The method of any one of the preceding claims, wherein the arithmetic of the second precision at least comprises at least one floating-point number format.

5. The method of any one of the preceding claims, wherein the arithmetic of the second precision comprises a combination of at least one floating-point number format and at least one integer number format.

6. The method of any one of the preceding claims, wherein the at least one mathematical model is configured to determine the errors caused by converting the respective at least one floating-point number format of the first precision into at least one number format of the second precision, and for each parameter within the neural network, the at least one mathematical model determines how the respective parameter is likely to change when using the second precision.

7. The method of any one of the preceding claims, wherein at least one mathematical model is configured to determine the errors caused by using the arithmetic of the second precision during neural network computations, considering various network computation operations.

8. The method of claim 7, wherein the various neural network computations comprise one or more of a convolution operation, a matrix multiplication, and an activation function.

9. The method of any one of the preceding claims, wherein the at least one mathematical model utilizes one or more Gaussian error distributions and/or noise distributions.

10. The method of any one of the preceding claims, wherein the optimization problem is formulated as a mixed-integer nonlinear programming, MINLP, problem.

11. The method of any one of the preceding claims, wherein solver utilizes at least one of sequential quadratic programming, SQP, sequential linear-quadratic programming, SLQP, a heuristic algorithm, a metaheuristic algorithm, simulated annealing, SA, a genetic algorithm, GA, or a hybrid of the aforementioned.

12. An apparatus (100) for compressing a neural network, comprising:
processing circuitry (110) configured to:
receive a neural network comprising a set of parameters being in at least one floating-point number format of a first precision;
apply at least one mathematical model on the neural network to determine errors introduced by using arithmetic of a second precision lower than the first precision and propagation through network layers of the neural network due to using the arithmetic of the second precision instead of the first precision;
apply a solver to an optimization problem formulated based on the errors determined by the at least one mathematical model to determine a set of optimized parameters; and
compress the neural network based on the set of optimized parameters to output a compressed neural network.

13. An electronic device (400), comprising a neural network compressed according to the method of any one of claims 1 to 11.

14. An aircraft (500), comprising a device (510) comprising a neural network compressed according to any one of claims 1 to 11.

15. A computer program, comprising instructions which, when the program is executed by a computer, cause the computer to carry out the method of any one of claims 1 to 11.
